# EUROPÄISCHE PATENTSCHRIFT

(11) **EP 1 299 886 B1**
(45) Veröffentlichungstag und Bekanntmachung des Hinweises auf die Patenterteilung: **01.03.2006**
(21) Anmeldenummer: 01953869.3
(22) Anmeldetag: 10.07.2001
(51) Int. Cl.: G12B 17/04, G02B 5/20, H01Q 13/08

(54) **OPTISCHES BAUELEMENT ZUR FREQUENZSELEKTIVEN REFLEXION IM GIGAHERTZ- UND TERAHERTZ-BEREICH**
OPTICAL ELEMENT FOR FREQUENCY-SELECTIVE REFLECTION IN THE GIGAHERTZ AND TERAHERTZ RANGE
COMPOSANT OPTIQUE À RÉFLEXION SÉLECTIVE EN FRÉQUENCE DANS LE DOMAINE GIGAHERTZ ET TERAHERTZ

(30) Priorität: 10.07.2000 DE 10033259
(43) Veröffentlichungstag der Anmeldung: 09.04.2003
(73) Patentinhaber: Technische Universität, 38106 Braunschweig (DE)
(72) Erfinder: KNOBLOCH, Pascal, 38102 Braunschweig (DE); TURCHINOVICH, D., Institut für Hochfrequenztechnik, 38106 Braunschweig (DE); DOBBERTIN,T., c/o Institut für Hochfrequenztechnik, 38106 Braunschweig (DE); KOCH, Martin, c/o Institut für Hochfrequenztechnik, 38106 Braunschweig (DE)
(74) Vertreter: Gerstein, Hans Joachim
(86) Internationale Anmeldenummer: PCT/DE2001/002492
(87) Internationale Veröffentlichungsnummer: WO 2002/005291

(56) Entgegenhaltungen:
- WO-A-94/02972
- DD-A- 146 224
- DE-A- 3 918 383
- US-A- 4 854 670
- DATABASE WPI Week 199229 Derwent Publications Ltd., London, GB; AN 1992-240986 XP002187413 -& SU 1 675 816 A (UNIV. KHARKOVSK), 7. September 1991 (1991-09-07)
- DATABASE WPI Week 199235 Derwent Publications Ltd., London, GB; AN 1992-291326 XP002187414 -& SU 1 682 950 A (SIBIRSK FIZ TEKH INST), 7. Oktober 1991 (1991-10-07)

## Beschreibung

Die Erfindung bezieht sich auf ein optisches Bauelement für Anwendungen im Gigahertz- und Terahertz- Frequenzbereich.

Zur Beeinflussung des Strahlengangs von elektromagnetischen Wellen mit Frequenzen unterhalb des Infrarot-Bereiches werden derzeit Metallflächen verwendet, die die elektromagnetische Strahlung teilweise absorbieren und überwiegend reflektieren. Um in diesem Frequenzbereich elektromagnetische Strahlung selektiv herauszufiltern, sind Bandfilter aus Metällgittern bekannt, die mit einer jeweils geeigneten Gitterkonstante hergestellt werden. Ein derartiger Bandpaß-Filter ist in "Applied Optics", Volume 20, Nr. 8 vom 15.4.1981, Seite 1361 beschrieben.

In der DE 39 18 383 A1 ist ein Fassadenaufbau von Hochbauten beschrieben, bei der Metallfolien im Abstand einer Wellenlänge von λ/4 voneinander an der Fassade aufgebracht sind, um auftreffende Wellen zu absorbieren und die Reflexion zu verringern. Hierbei wird die Interferrenzauslöschung des reflektierten Wellenanteils ausgenutzt. Aufgrund der Metallfolien ist die Fassade nicht wellendurchlässig.

In der DE 39 13 421 A1 ist ein Außenwandelement für Gebäude mit einer hohen Reflexionsdämpfung für Radarstrahlen beschrieben. Das Außenwandelement besteht aus einer Vielzahl von Segmenten, bei denen die reflektierte Oberfläche abwechselnd in der Tiefe derart gestaffelt sind, dass jeweils zwei benachbarte Flächensegmente um einen Abstand voneinander entfernt angeordnet sind, der einer Viertelwellenlänge der verwendeten Radarstrahlung entspricht. Die von den benachbarten Oberflächensegmenten reflektierten Radarwellen weisen infolge der Tiefenstaffelung der Oberflächensegmente einen Phasenunterschied von einer halben Wellen gegeneinander auf, so dass die reflektierten Wellen sich gegenseitig auslöschen. Nachteilig erfolgt die Absorption nicht frequenzselektiv.

In der DD 146 224 ist eine Anordnung zur induzierten Absorption elektromagnetischer Strahlung beschrieben, bei der eine Anzahl von interferenzfähigen Schichten aus abwechselnd niedrig brechenden und hochbrechenden Einzelschichten vorgesehen sind. Die auf einem dielektrischen Spiegel aufbauende Anordnung ist allerdings lediglich zur Absorption und nicht zur frequenzselektiven Reflexion geeignet.

In der SU 1 675 816 A1 ist ein dielektrischer Spiegel mit alternierend angeordneten Zink- und Kryolith-Schichten als Reflektor für Laserlicht beschrieben.

In dem US-Patent 4,854,670 ist ein dielektrischer Spiegel mit alternierend übereinander geschichteten Siliziumoxid- und Titanoxidschichten offenbart, der als Reflektor für Infrarotlicht im Wellenlängenbereich von 850 bis 900 nm, d. h. im Frequenzbereich von 352,9 bis 333,33 THz wirkt. Bei dem dielektrischen Spiegel werden Substrate mit Schichten von einer Dicke im Bereich von etwa 100 bis 220 nm mit Hilfe einer Sputtertechnik beschichtet. Eine großflächige Fertigung ist nicht möglich. Zudem ist der dielektrische Spiegel bruchanfällig und in der Herstellung relativ teuer.

Aufgabe der Erfindung war es, ein flächiges optisches Bauelement zu schaffen, das frequenzselektiv in einem Frequenzbereich von 5 GHz bis 10 THz reflektiert und für die anderen Frequenzbereiche nahezu durchlässig ist.

Damit realisiert das optische Bauelement in Transmission gleichzeitig ein frequenzselektives Filtem. Die optischen Bauelemente sollen vorteilhafterweise kostengünstig und mit relativ geringem Aufwand herstellbar sein.

Diese Aufgabe wird erfindungsgemäß gelöst durch ein optisches Bauelement mit mindestens einer ersten Schicht aus einem für elektromagnetische Strahlung einer Referenzfrequenz zwischen 5 Gigahertz und 10 Terahertz optisch durchlässigen ersten Material mit einem ersten Brechungsindex, wobei die erste Schicht eine optische Dicke von ungefähr einem Viertel der Wellenlänge der elektromagnetischen Strahlung der Referenzfrequenz in dem ersten Material aufweist. Die erste Schicht ist auf einem für die elektromagnetische Strahlung der Referenzfrequenz durchlässigen zweiten Schicht aufgebracht, dessen zweiter Brechungsindex von dem ersten Brechungsindex unterschiedlich ist. Die optische Dicke der zweiten Schicht beträgt etwa ¼ oder ½ der Wellenlänge der Referenzfrequenz. Das erste und zweite Material ist ein Kunststoffmaterial mit Dotierung.

Erfindungsgemäß werden somit Interferenzerscheinungen der elektromagnetischen Strahlung im Gigahertz- bzw. Terahertz-Frequenzbereich aufgrund unterschiedlicher dielektrischer Eigenschaften bzw. unterschiedlicher Brechungsindizes zweier optisch durchlässiger Materialien ausgenutzt, um eine frequenzselektive Reflexion, zum Beispiel zur Abschirmung von Räumen, zu bewirken. Dies ist für die drahtlose "In-Door"- Kommunikation im GHz- und THz-Bereich wichtig. In den übrigen Frequenzbereichen ist das optische Bauelement im Wesentlichen durchlässig, wobei im Allgemeinen eine Reflexionswirkung auch bei höheren Harmonischen der Referenzfrequenz auftritt.

Das optische Bauelement nutzt die physikalischen Eigenschaften eines an sich für andere Frequenzbereiche bekannten dielektrischen Spiegels aus. Die Verwendung eines dielektrischen Spiegels zur frequenzselektiven Abschirmung von Räumen war bislang in den herkömmlich genutzten Frequenzen im Mikrowellenbereich nicht möglich, da Vielfachschichten von erheblicher Dicke erforderlich wären.

Die optisch durchlässigen Materialien können vorteilhafterweise Kunststoffmaterialien wie Polyethylen oder Polystyrol sein, die auch in großen Flächenbereichen relativ kostengünstig bei sehr genauer und gleichmäßiger Schichtdicke hergestellt werden können. Vorteilhafterweise wird ein optisch durchlässiges Material mit geringer Absorption der jeweils gewählten Referenzfrequenz gewählt, damit das erfindungsgemäße optische Bauelement eine möglichst vollständige Reflexion oder Transmission der Strahlung der Referenzfrequenz ermöglicht.

Die Anwendung von Interferenzerscheinungen beim Durchtritt elektromagnetischer Strahlung durch Schichten mit optischen Dicken im Wellenlängenbereich der Strahlung ist als solche bereits für Licht im sichtbaren Bereich bekannt. Hierbei werden insbesondere dielektrische Spiegel hergestellt, bei denen Schichten unterschiedlicher Dielektrizitätskonstante bzw. mit unterschiedlichem Brechungsindex alternierend übereinander angeordnet sind und jeweils eine optische Dicke von einem Viertel der Wellenlänge der Referenzstrahlung haben. Hierbei ergibt sich für eine Reflexionsbedingung eine konstruktive Interferenz, für die Transmissionsbedingung hingegen eine destruktive Interferenz. Weiterhin ist die Vergütung optischer Bauteile, z. B. optischer Linsen, bekannt. Durch eine derartige Vergütung kann eine Reflexion an der Grenzfläche zwischen Luft und dem optischen Bauteil durch destruktive Interferenz der an der Grenzfläche zwischen der Luft und der Vergütungsschicht sowie der Grenzfläche zwischen der Vergütungsschicht und dem Bauteil reflektierten Wellen gering gehalten werden.

Erfindungsgemäß werden entsprechende Interferenzerscheinungen nunmehr für elektromagnetische Strahlung im Gigahertz- und Terahertz-Frequenzbereich ausgenutzt.

Der Erfindung liegt hierbei die Erkenntnis zugrunde, daß für optische Bauelemente, die Interferenzerscheinungen aufgrund unterschiedlicher dielektrischer Eigenschaften der verwendeten Materialien ausnutzen, gerade in dem erfindungsgemäßen Frequenzbereich zwischen 5 Gigahertz, vorzugsweise jedoch ab 50 Gigahertz, und 10 Terahertz Schichtdicken auszubilden sind, die im Mikrometerbereich bis einige 100 Mikrometer-Bereich bzw. Millimeter-Bereich liegen. Derartige Schichten können auch großtechnisch sehr genau und sehr gleichmäßig hergestellt werden. Hierbei können insbesondere Kunststoffmaterialien, wie z. B. Polyethylen oder Polystyrol verwendet werden, die in diesem Dickenbereich auch für großflächige Bereiche mit sehr genauer Dicke hergestellt werden können. Insbesondere können bei Verwendung von Kunststoffmaterialien auch verschiedene Schichten mit unterschiedlichen Brechungsindex, z. B. unterschiedliche Kunststoffmaterialien oder Kunststoffmaterialien mit unterschiedlichen Dotierungen weiterer Bestandteile - auch für großflächige Bereiche kostengünstig miteinander verbunden werden. Die erfindungsgemäßen Schichtdicken im Mikrometer- und Millimeter-Bereich erfordern auch für großflächige Anwendungen- nur einen geringen Materialaufwand. Weiterhin weisen insbesondere Kunststoffmaterialien dieser Dicken gute mechanische Eigenschaften, insbesondere eine hohe Flexibilität gegenüber mechanischen Beeinträchtigungen, auch bei plötzlichen mechanischen Belastungen, auf.

Vorteilhafterweise kann erfindungsgemäß ein dielektrischer Spiegel zur Reflexion gewünschter Frequenzbereiche hergestellt werden. Dies kann zum einen durch mehrere alternierende Schichten mit jeweils einer optischen Dicke von einem Viertel der Wellenlänge der Referenzstrahlung erfolgen, oder auch durch andere geeignete Schichtfolgen.

Erfindungsgemäß kann der dielektrische Spiegel für Strahlung im Gigahertz- und Terahertz-Frequenzbereich zum einen für optische Bauelemente in Geräten, die eine Strahlung in diesem Wellenlängenbereich aussenden oder empfangen, genutzt werden.

Weiterhin kann der erfindungsgemäße dielektrische Spiegel, insbesondere bei einer Herstellung aus dünnen Kunststofffolien, großflächig zur Abschirmung von Raumeinheiten verwendet werden. Diese Abschirmung kann zum Beispiel erreicht werden, indem ein mehrschichtiges optisches Bauelement z. B. zur Auskleidung von Räumen verwendet wird. Dies kann auf einer Wand, bzw. auf einer Tapete, oder innerhalb der Wand, z. B. unterhalb der Tapete, zwischen Pappkartonwänden oder innerhalb eines Mauerwerks erfolgen. Weiterhin können auch Fenster und Glasscheiben mit einem erfindungsgemäßen optischen Bauelement verkleidet werden, wenn die verwendeten Materialien im sichtbaren Frequenzbereich ebenfalls durchsichtig sind.

Erfindungsgemäß können hierdurch in einem Gebäude zelluläre Bereiche ausgebildet werden, in denen jeweils eine Referenzstrahlung in Gigahertz- oder Terahertz-Frequenzbereich zur drahtlosen Datenübertragung zwischen verschiedenen Einheiten genutzt werden. Der zelluläre Bereich ist dabei für diesen Frequenzbereich gegenüber der Außenwelt zumindest weitgehend vorteilhafterweise vollständig abgeschirmt. Somit können innerhalb eines Gebäudes mehrere zelluläre Bereiche ausgebildet werden, oder ein Gebäude bzw. ein Stockwerk in einem Gebäude kann als Ganzes gegenüber der Außenwelt abgeschirmt werden. Die erfindungsgemäße Abschirmung hat gegenüber einer Abschirmung mittels z.B. einer großflächigen Metallschicht den Vorteil, dass andere Frequenzbereiche nicht betroffen sind und somit eine Datenübertragung über die anderen Frequenzbereiche, z.B. mittels Mobilfunk, Radio etc., unbeeinflußt bleibt.

Derartige Anwendungen sind insbesondere für hohe Datenübertragungen interessant, da der erfindungsgemäß verwendete Gigahertz- und Terahertz-Frequenzbereich gegenüber bekannten Datenübertragungen im Megahertz-Frequenzbereich höhere Datenübertragungsraten ermöglicht. Hiermit können auch große Datenmengen schnell übertragen werden, für die herkömmlicherweise parallele Schnittstellen verwendet werden, wie z. B. eine drahtlose Datenübertragung von einem Rechner zu einem Drucker.

In den Gebäudewänden können vorteilhafterweise auch mehrere optische Bauelemente mit gegeneinander leicht verschobenen Referenzfrequenzen ausgebildet werden. Die gewünschten Wirkungen einer Reflexion bzw Transmission treten idealerweise nur bei genau senkrechtem Einfall auf, bei leicht schrägem Einfall werden noch hinreichend gute Reflexionen erreicht. Bei flachem Einfall können eventuell jedoch größere Strahlenintensitäten das optische Bauelement durchdringen. Erfindungsgemäß kann durch das zweite optische Bauelement gezielt eine unter einem flachen Winkel auf die Wand einfallende Strahlung reflektiert werden, so daß insgesamt Strahlung aus jeder Raumrichtung reflektiert werden kann.

Die Erfindung wird im folgenden anhand der beiliegenden Zeichnungen an einigen Ausführungsformen erläutert. Es zeigen:
- Fig. 1: einen Schnitt durch ein optisches Bauteil für Reflexionsanwendungen gemäß einer ersten Ausführungsform der Erfindung;
- Fig. 2: einen Schnitt durch ein optisches Bauelement für Reflexionsanwendungen gemäß einer zweiten Ausführungsform der Erfindung.

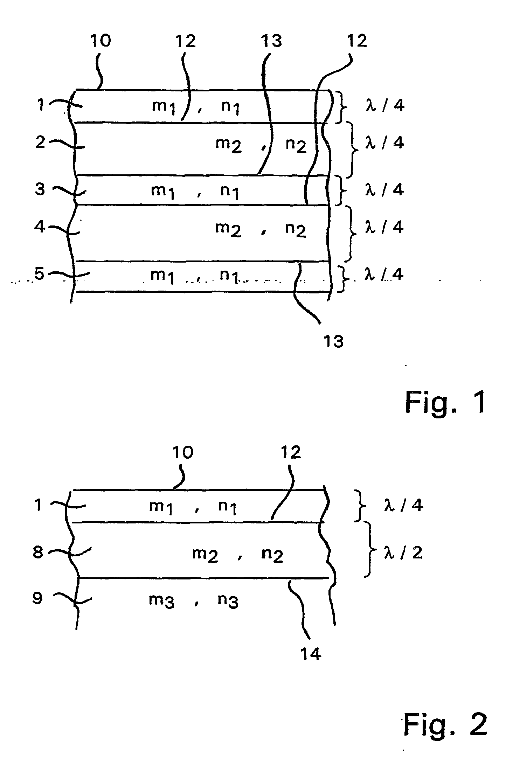

In Fig. 1 ist ein dielektrischer Mehrschichtspiegel gezeigt, bei dem erste Schichten 1, 3, 5 aus einem ersten Material m1 mit einem ersten Brechungsindex n1 mit zweiten Schichten 2, 4 aus einem zweiten Material m2 mit einem zweiten Brechungsindex n2 alternieren. Dieses Material kann insbesondere ein Kunststoff, z.B. Polyethylen oder Polystyrol sein. Hierbei ist n1 größer als n2. Die Schichten 1 bis 5 haben jeweils eine optische Dicke von einem Viertel der Wellenlänge λ einer Referenzstrahlung im Frequenzbereich von 5 GHz bis 10 THz. Geeignete Referenzfrequenzen liegen hierbei insbesondere im Bereich von 50 Gigahertz bis 2 Terahertz. Aufgrund der unterschiedlichen Brechungsindizes und somit unterschiedlicher Wellenlänge der Referenzstrahlung in dem jeweiligen Medium sind die ersten Schichten 1, 3, 5 dünner als die zweiten, optisch dünneren Schichten 2 und 4. Für eine vertikal einfallende Strahlung ergibt sich bei einem Einfall der Referenzstrahlung an einer ersten Grenzfläche 10 zwischen Luft und der ersten Schicht aufgrund einer Reflexion an einem optisch dichteren Medium für die reflektierte Strahlung eine Frequenzverschiebung von der Hälfte der Wellenlänge. An den Grenzschichten 12 von der optisch dichteren ersten Schicht an einer optisch dünneren zweiten Schicht ergibt sich eine Reflexion ohne Phasenverschiebung. An einer Reflexion von einer Grenzfläche 13 von einer optisch dünneren zweiten Schicht an einer optisch dickeren ersten Schicht ergibt sich wiederum eine Reflexion unter Phasenverschiebung von der Hälfte der Wellenlänge.

Da sämtliche Schichten eine optische Dichte von einem Viertel einer geeigneten Referenzfrequenz haben, wird Strahlung der Referenzfrequenz bei senkrechtem Einfall fast vollständig reflektiert. Bei dieser Ausführungsform ist vorteilhafterweise die letzte Schicht 5 eine erste Schicht des optisch dichteren Mediums.

Fig. 2 zeigt eine weitere Ausführungsform eines dielektrischen Spiegels, bei dem auf eine optisch dichte erste Schicht 1 eines ersten Materials m1 mit erstem Brechungsindex n1 eine optisch dünnere zweite Schicht 8 eines zweiten Materials m2 mit zweiten Brechungsindex n2 folgt. Unterhalb der zweiten Schicht 8 ist ein Unterbereich 9 aus einem dritten Material mit einem optisch dünneren Material m3 ausgebildet. Somit ist n1 größer n2 größer n3. Bei dieser Ausführungsform hat die erste Schicht 1 wiederum eine Dicke von einem Viertel der Wellenlänge einer Referenzstrahlung, die zweite Schicht 8 hat eine Dicke von der Hälfte der Wellenlänge der Referenzstrahlung. Es kann sich ein beliebig großer Unterbereich 9 anschließen.

Bei dieser Ausführungsform wird die Referenzstrahlung wegreflektiert, so daß lediglich andere Frequenzbereiche in den optisch durchlässigen Untergrund 9 eintreten können. Hierbei findet zusätzlich zu den Reflexionen an den Grenzflächen 10 und 12, die denjenigen der Fig. 1 entsprechen, an der Grenzfläche 14 eine Reflexion an einem optisch dünneren Medium statt, wodurch eine Welle mit einer Phasenverschiebung von der Hälfte der Wellenlänge zurück reflektiert wird. Diese zurückreflektierte Welle erfährt beim Durchtritt durch die zweite Schicht 8 gegenüber der an der Grenzfläche 12 reflektierten Welle eine Phasenverschiebung von λ, so daß sich die an den Grenzflächen 12 und 14 reflektierten Wellen, wie auch die an der Grenzfläche 10 reflektierten Wellen konstruktiv überlagern.

## Patentansprüche

1. Optisches Bauelement zur frequenzselektiven Reflexion im Gigahertz- und Terahertz-Frequenzbereich und Wellendurchlässigkeit, **gekennzeichnet durch:**
- mindestens eine erste Schicht (1, 3, 5) aus einem für elektromagnetische Strahlung einer Referenzfrequenz (f) zwischen 5 Gigahertz (GHz) und 10 Terahertz (THz) optisch durchlässigem ersten Material (m1) mit einem ersten Brechungsindex (n1) und einer optischen Dicke von ungefähr einem Viertel der Wellenlänge (λ) der elektromagnetischen Strahlung der Referenzfrequenz (f) in dem ersten Material (m1),
- unterhalb der ersten Schicht (1) mindestens eine zweite Schicht (2) aus einem für die elektromagnetische Strahlung der Referenzfrequenz (f) optisch durchlässigen zweiten Material (m2) mit einem zweiten Brechungsindex (n2) und einer optischen Dicke von ungefähr einem Viertel oder der Hälfte der Wellenlänge (λ) der elektromagnetischen Strahlung der Referenzfrequenz (f) in dem zweiten Material (m2),
- wobei der erste Brechungsindex (n1) und der zweite Brechungsindex (n2) unterschiedlich sind und das erste und zweite Material (m1, m2) ein Kunststoffmaterial mit unterschiedlichen Dotierungen weiterer Bestandteile ist.

2. Optisches Bauelement nach Anspruch 1, **dadurch gekennzeichnet, dass** die Referenzfrequenz (f) im Bereich von 5 GHz bis 5 THz, vorzugsweise 50 GHz bis 2 THz liegt.

3. Optisches Bauelement nach einem der Ansprüche 1 oder 2, **dadurch gekennzeichnet, dass** der zweite Brechungsindex (n2) größer als der erste Brechungsindex (n1) ist und das optische Bauelement als Strahlungsempfänger bzw. Strahlungsemitter, z. B. Antenne, oder als strahlungsdurchlässiges optisches Bauelement, vorzugsweise als Strahlungsleiter, Linse oder Prisma oder Strahlteiler ausgebildet ist.

4. Optisches Bauelement nach einem der Ansprüche 1 oder 2, **dadurch gekennzeichnet, dass** der erste Brechungsindex (n1) größer als der zweite Brechungsindex (n2) ist.

5. Optisches Bauelement nach Anspruch 4, **dadurch gekennzeichnet, dass** alternierend übereinander mehrere erste Schichten (1, 3, 5) und zweite Schichten (2, 4) vorgesehen sind.

6. Optisches Bauelement nach Anspruch 4 oder 5, **dadurch gekennzeichnet, dass** eine ungerade Anzahl von Schichten vorgesehen ist, wobei die oberste Schicht (1) und die unterste Schicht (5) erste Schichten sind.

7. Optisches Bauelement nach einem der Ansprüche 1 oder 2 **dadurch gekennzeichnet, dass**
unterhalb der ersten Schicht (1) eine zweite Schicht (8) vorgesehen ist, wobei die zweite Schicht (8) aus einem für die elektromagnetische Strahlung der Referenzfrequenz (f) optisch durchlässigen zweiten Material (m2) mit einem zweiten Brechungsindex (n2) ausgebildet ist und eine zweite Dicke von ungefähr der Hälfte der Wellenlänge (λ) der elektromagnetischen Strahlung der Referenzfrequenz (f) in dem zweiten Material (m2) aufweist,
unterhalb der zweiten Schicht (8) ein Unterbereich (9) aus einem für die elektromagnetische Strahlung der Referenzfrequenz (f) optisch durchlässigen dritten Material (m3) mit einem dritten Brechungsindex (n3) ausgebildet ist, und
der erste Brechungsindex (n1) größer als der zweite Brechungsindex (n2) ist und der zweite Brechungsindex (n2) größer als der dritte Brechungsindex (n3) ist.

8. Gebäudewand, bei der in zumindest einem großflächigen Bereich auf einer Außenfläche oder einem Innenabschnitt der Gebäudewand mindestens ein optisches Bauelement nach einem der Ansprüche 4 bis 7 vorgesehen ist.

9. Gebäudewand nach Anspruch 8, **dadurch gekennzeichnet, dass** sie zwei oder mehr optische Bauelemente nach einem der Ansprüche 4 bis 7 aufweist, die voneinander verschiedene, vorzugsweise nahe beieinanderliegende, Referenzfrequenzen (f1, f2) aufweisen und in Richtung der Wanddicke übereinander angeordnet sind.

10. Gebäude mit Innenwänden und Außenwänden, bei denen ein Teil der Außenwände, vorzugsweise auch ein Teil der Innenwände, als Gebäudewand nach Anspruch 8 oder 9 ausgebildet sind.

## Claims

1. Optical component for frequency-selective reflection in the gigahertz and terahertz frequency range and wave transparency **characterized by**
- at least one first layer (1, 3, 5) of a first material (m1), which is optically transparent for electromagnetic radiation of a reference frequency (f) between 5 gigahertz (GHz) and 10 terahertz (THz) with a first refractive index (n1) and an optical thickness of approximately one quarter of the wavelength (λ) of the electromagnetic radiation of the reference frequency (f) in the first material (m1),
- underneath the first layer (1) at least one second layer (2) of a second material (m2), which is optically transparent for the electromagnetic radiation of the reference frequency (f), with a second refractive index (n2) and an optical thickness of approximately one quarter or half of the wavelength (λ) of the electromagnetic radiation of the reference frequency (f) in the second material (m2),
- the first refractive index (n1) and the second refractive index (n2) being different and the fist and second material (m1, m2) being a plastic material with different dotations of further elements.

2. Optical component as claimed in claim 1 **characterized in that** the reference frequency (f) is in the range from 5 GHz to 5 THz, preferably from 50 GHz to 2 THz.

3. Optical component as claimed in claims 1 or 2 **characterized in that** the second refractive index (n2) is greater than the first refractive index (n1) and the optical component is constructed as a radiation receiver or radiation emitter, e. g. antenna, or as an optical component transparent to radiation, preferably as a radiation conductor, lens or prism or beam devider.

4. Optical component as claimed in claims 1 or 2 **characterized in that** the first refractive index (n1) is greater than the second refractive index (n2).

5. Optical component as claimed in claim 4 **characterized in that** multiple first layers (1, 3, 5) and second layers (2, 4) are provided alternately above one another.

6. Optical component as claimed in claims 4 or 5 **characterized in that** an odd number of layers is provided, wherein the top layer (1) and the bottom layer (5) are first layers.

7. Optical component as claimed in claims 1 or 2 **characterized in that**
- underneath the first layer (1) a second layer (8) is provided, whereas the second layer (8) is constructed of a second material (m2), which is optically transparent for the electromagnetic radiation of the reference frequency (f), with a second refractive index (n2) and having a second thickness of approximately half of the wavelength (λ) of the electromagnetic radiation of the reference frequency (f) in the second material (m2),
- underneath the second layer (8) a sub-area of a third material (m3), which is optically transparent for the electromagnetic radiation of the reference frequency (f) with a third refractive index (n3) is constructed, and
- the first refractive index (n1) is greater than the second refractive index (n2) and the second refractive index (n2) is greater than the third refractive index (n3).

8. Building wall in which at least one optical component as claimed in claims 4 to 7 is provided in at least one large area of a outside surface or an inside section of the building wall.

9. Building wall as claimed in claim 8 **characterized in that** it has two or more optical components as claimed in claims 4 to 7 having reference frequencies (f1, f2) which are different from one another and are preferably close to one another and which are arranged above one another in the direction of the wall thickness.

10. Building with inside walls and outside walls in which some of the outside walls, preferably also some of the inside walls are constructed as building wall as claimed in claims 8 or 9.

## Revendications

1. Composant optique à réflexion sélective en fréquence dans le domaine gigahertz et térahertz et à transmissibilité d'onde, **caractérisé par** :
- au moins une première couche (1, 3, 5) en une première matière (m1) optiquement transparente pour le rayonnement électromagnétique d'une fréquence de référence (f) comprise entre 5 gigahertz (GHz) et 10 térahertz (THz) avec un premier indice de réfraction (n1) et une épaisseur optique d'environ un quart de la longueur d'onde (λ) du rayonnement électromagnétique de la fréquence de référence (f) dans la première matière (m1),
- sous la première couche (1) au moins une deuxième couche (2) en une deuxième matière optiquement transparente pour le rayonnement électromagnétique de la fréquence de référence (f) avec un deuxième indice de réfraction (n2) et une épaisseur optique d'environ un quart ou la moitié de la longueur d'onde (λ) du rayonnement électromagnétique de la fréquence de référence dans la deuxième matière (m2),
- dans lequel, le premier indice de réfraction (n1) et le deuxième indice de réfraction sont différents et la première et deuxième matières (m1 et m2) sont en matière synthétique ayant des teneur différentes d'autres constituants.

2. Composant optique selon la revendication 1, **caractérisé en ce que** la fréquence de référence (f) est située dans le domaine de 5 GHz à 5 THz et de préférence de 50 GHz à 2 THz.

3. Composant optique selon l'une des revendications 1 ou 2, **caractérisé en ce que** le deuxième indice de réfraction (n2) est plus grand que le premier indice de réfraction (n1) et le composant optique est réalisé en tant que récepteur de rayonnement ou émetteur de rayonnement, par exemple une antenne, ou en tant que composant optique transparent au rayonnement, de préférence en tant que conducteur de rayonnement, lentille, prisme ou diviseur de rayonnement.

4. Composant optique selon l'une des revendications 1 ou 2, **caractérisé en ce que** le premier indice de réfraction (n1) est plus grand que le deuxième indice de réfaction (n2).

5. Composant optique selon la revendication 4, **caractérisé en ce qu'**il présente plusieurs premières couches (1, 3, 5) et deuxième couches (2, 4) superposées de façon alternée.

6. Composant optique selon l'une des revendications 4 ou 5, **caractérisé en ce qu'**il comprend un nombre impair de couches, la couche supérieure (1) et la couche inférieure (5) étant des premières couches.

7. Composant optique selon la revendication 1 ou 2, **caractérisé en ce que** :
- sous la première couche (1) est prévue une deuxième couche (8), cette deuxième couche étant constituée par un deuxième matière (m2) optiquement transparente à l'égard du rayonnement électromagnétique de fréquence de référence (f) ayant un deuxième indice de réfraction (n2) et présente une deuxième épaisseur d'environ la moitié de la longueur d'onde (λ) du rayonnement électromagnétique de fréquence de référence (f) dans la deuxième matière (m2),
- sous la deuxième couche (8) une zone inférieure (9) constituée par une troisième matière (m3) optiquement transparente pour le rayonnement électromagnétique de fréquence de référence (f), ayant un troisième indice de réfraction (n3) et ,
- le premier indice de réfraction (n1) est plus grand que le deuxième indice de réfraction (n2) et le deuxième indice de réfraction (n2) est plus grand que le troisième indice de réfraction (n3).

8. Paroi de bâtiment, dans laquelle au moins une zone de grande surface sur une surface extérieure ou une section intérieure de la paroi du bâtiment comprend au moins un composant optique selon l'une des revendications 4 à 7.

9. Paroi de bâtiment selon la revendication 8, **caractérisée en ce qu'**elle comprend deux ou plus de composants optiques selon l'une des revendications 4 à 7, qui présentent des fréquences de référence (f1, f2) qui différent l'une de l'autre, de préférence proches l'une de l'autre et qui sont disposés l'une sur l'autre dans la direction de l'épaisseur de la paroi.

10. Bâtiment ayant des parois intérieures et des parois extérieures, dans lesquelles une partie des parois extérieures, de préférence également une partie des parois intérieures est constituée par une paroi de bâtiment selon la revendication 8 ou 9.
